# FASCICULE DE BREVET EUROPEEN

(11) **EP 4 069 584 B1**
(45) Date de publication et mention de la délivrance du brevet: **21.08.2024**
(21) Numéro de dépôt: 20815870.9
(22) Date de dépôt: 03.12.2020
(51) Int. Cl.: B64C 19/00, B64D 31/06, G05D 1/00

(54) **SYSTÈME ÉLECTRONIQUE DE COMMANDE D'UN AÉRONEF SANS PILOTE À BORD, PROCÉDÉS ET PROGRAMMES D'ORDINATEUR ASSOCIÉS**
ELEKTRONISCHES SYSTEM ZUM STEUERN EINES UNBEMANNTEN FLUGZEUGS UND ZUGEHÖRIGE VERFAHREN UND COMPUTERPROGRAMME
ELECTRONIC SYSTEM FOR CONTROLLING AN UNMANNED AIRCRAFT, AND ASSOCIATED METHODS AND COMPUTER PROGRAMS

(30) Priorité: 05.12.2019 FR 1913791
(43) Date de publication de la demande: 12.10.2022
(73) Titulaire: THALES, 92400 Courbevoie (FR)
(72) Inventeur: RIEDINGER, Marc, 31000 TOULOUSE (FR); FOURNIER, Philippe, 31000 TOULOUSE (FR)
(74) Mandataire: Lavoix
(86) Numéro de dépôt international: PCT/EP2020/084434
(87) Numéro de publication internationale: WO 2021/110820

(56) Documents cités:
- WO-A1-2017/207511
- WO-A1-2019/225762
- US-B1- 9 734 723

## Description

La présente invention concerne un système électronique de commande d'un aéronef sans pilote à bord, le système comprenant un dispositif distant de gestion de vol de l'aéronef, adapté à communiquer à distance avec l'aéronef, et au moins un dispositif embarqué de gestion de vol de l'aéronef, embarqué à bord de l'aéronef.

L'invention concerne également un procédé distant de commande d'un aéronef sans pilote à bord, le procédé étant mis en oeuvre par un dispositif distant de gestion de vol d'un système électronique de commande d'un aéronef sans pilote à bord.

L'invention concerne également un programme d'ordinateur comportant des instructions logicielles qui, lorsqu'elles sont exécutées par un ordinateur, mettent en oeuvre un tel procédé distant de commande d'un aéronef sans pilote à bord.

L'invention concerne également un procédé embarqué de commande d'un aéronef sans pilote à bord, le procédé étant mis en oeuvre par un dispositif embarqué de gestion de vol d'un système électronique de commande d'un aéronef sans pilote à bord.

L'invention concerne également un programme d'ordinateur comportant des instructions logicielles qui, lorsqu'elles sont exécutées par un ordinateur, mettent en oeuvre un tel procédé embarqué de commande d'un aéronef sans pilote à bord.

L'invention se situe dans le domaine des systèmes électroniques de commande d'un aéronef sans pilote à bord comprenant un dispositif distant de gestion de vol de l'aéronef, le dispositif distant étant de préférence installé dans une station de contrôle de l'aéronef, et comprenant un dispositif embarqué de gestion de vol de l'aéronef, le dispositif embarqué étant embarqué à bord de l'aéronef.

On connait notamment un système électronique de commande d'un aéronef sans pilote à bord du type précité, dans lequel le dispositif distant de gestion de vol de l'aéronef comprend un module d'acquisition distant de données de plan de vol et un module de calcul distant d'une trajectoire distante en fonction des données de plan de vol acquises par le module d'acquisition distant, et dans lequel le dispositif embarqué de gestion de vol de l'aéronef comprend un module de calcul embarqué d'une trajectoire embarquée en fonction des données de plan de vol acquises par le module d'acquisition embarqué. Dans certains cas, la trajectoire peut être réduite à une ou plusieurs données de consigne telle qu'une vitesse, un cap, une altitude, une poussée, une pente, etc... Cette ou ces données de consigne peuvent constituer des éléments de trajectoire.

WO 2017/207511 A1, US 9 734 723 B1 et WO 2019/225762 A1 divulguent des systèmes électroniques de commande d'un aéronef sans pilote, dont le système du document WO2017/207511 A1 comprend un drone avec une entité embarquée et une entité de commande du drone située à distance du drone. L'entité de commande permet à un opérateur de sélectionner des données à envoyer vers l'entité embarquée, l'entité embarquée étant adaptée à exécuter des actions en fonction des données reçues. L'entité embarquée est agencée pour générer un message à partir des données produites par l'entité de commande et reçues par l'entité embarquée et le transmettre à l'entité de commande. L'entité de commande, via des moyens d'alerte, génère un signal d'information représentatif dudit message. Via des moyens de validation, l'opérateur peut commander la transmission d'un message d'intention autorisant ou non l'exécution desdites actions par le drone.

Toutefois un tel dispositif ne donne pas entière satisfaction, puisqu'il ne permet pas d'assurer une intégrité suffisante de la trajectoire embarquée.

Le but de cette invention est de proposer un système électronique de commande d'un aéronef sans pilote à bord assurant une haute intégrité de la trajectoire embarquée.

A cet effet, l'invention a pour objet un système électronique conforme à la revendication 1.

Suivant d'autres aspects avantageux de l'invention, le système électronique de commande d'un aéronef sans pilote à bord comprend une ou plusieurs des caractéristiques des revendications 2 à 5, prises isolément ou suivant toutes les combinaisons techniquement possibles.

L'invention a également pour objet un procédé distant de commande d'un aéronef sans pilote à bord conforme à la revendication 6.

L'invention a également pour objet un programme d'ordinateur conforme à la revendication 7.

L'invention a également pour objet un procédé embarqué de commande d'un aéronef sans pilote à bord conforme à la revendication 8.

L'invention a également pour objet un programme d'ordinateur conforme à la revendication 9.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
[Fig 1] la figure 1 est une représentation schématique d'une station de contrôle et d'un aéronef sans pilote à bord mettant en oeuvre un système électronique de commande d'un aéronef sans pilote à bord selon l'invention ;
[Fig 2] la figure 2 est une représentation schématique d'un dispositif distant et d'un dispositif embarqué de gestion de vol de l'aéronef du système électronique de commande d'un aéronef sans pilote à bord de la figure 2 ;
[Fig 3] la figure 3 est une représentation de données affichées par une unité d'acquisition d'instruction de l'utilisateur selon l'invention ; et
[Fig 4] la figure 4 est un organigramme des procédés distant et embarqué de commande d'un aéronef sans pilote à bord.

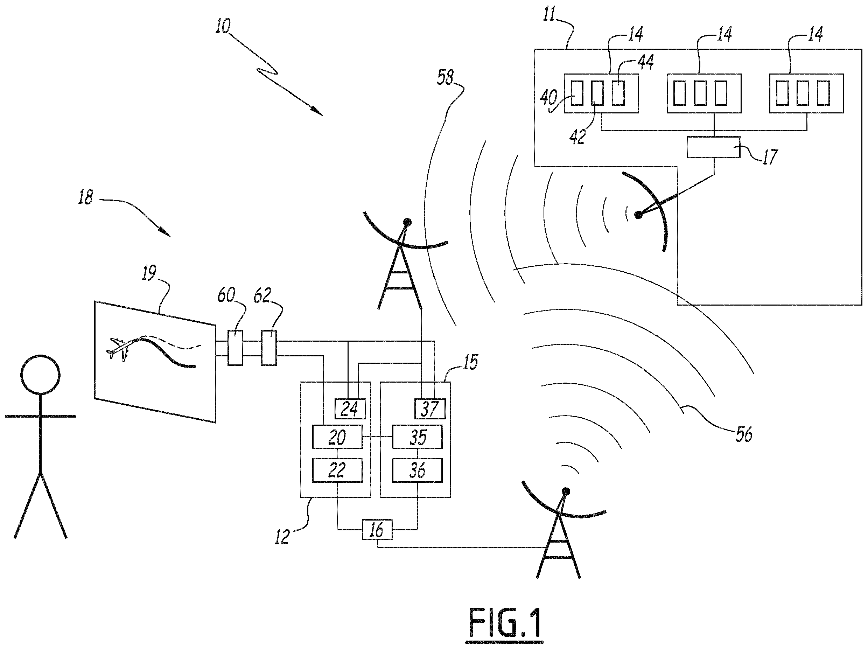

Un système électronique 10 de commande d'un aéronef sans pilote à bord 11, appelé simplement aéronef 11 par la suite, est représenté en figure 1. Le système de commande 10 comprend un dispositif 12 distant de gestion de vol de l'aéronef 11, au moins un dispositif 14 embarqué de gestion de vol de l'aéronef 11 et de préférence un dispositif distant complémentaire 15 de gestion de gestion de vol de l'aéronef 11.

Le système de commande 10 comprend de préférence un bloc de contrôle distant 16 et un bloc de contrôle embarqué 17.

Dans la figure 1, l'aéronef 11 comprend trois dispositifs embarqués 14.

Une station de contrôle 18 comprend un dispositif distant 12 ainsi qu'un dispositif distant complémentaire 15 de gestion de vol de l'aéronef 11.

Dans le mode de réalisation de la figure 1, la station de contrôle 18 comporte un bloc de contrôle distant 16 et l'aéronef 11 comprend un bloc de contrôle embarqué 17.

L'aéronef sans pilote à bord 11 est de préférence un avion sans pilote à bord. En variante, l'aéronef sans pilote à bord est un hélicoptère sans pilote à bord.

La station de contrôle 18 est de préférence une station de contrôle au sol. En variante, la station de contrôle 18 est une station de contrôle embarquée à bord d'un aéronef de contrôle.

La station de contrôle 18 comprend avantageusement une interface utilisateur 19. L'interface utilisateur 19 comporte par exemple des moyens d'affichage d'informations et des moyens de saisie d'information. L'interface utilisateur comporte par exemple un écran et un clavier. L'interface utilisateur 19 comporte en variante un écran tactile.

Le dispositif distant 12 est adapté à communiquer à distance avec l'aéronef 11.

Le dispositif distant 12 comprend un module 20 d'acquisition distant de données de plan de vol.

Le dispositif distant 12 comprend un module 22 de calcul distant d'une trajectoire distante en fonction des données de plan de vol acquises par le module d'acquisition distant 20.

Dans la figure 1, le dispositif distant 12 comprend un module 24 de validation de trajectoire configuré pour acquérir la trajectoire distante et une trajectoire embarquée transmise par le dispositif embarqué 14, pour valider la trajectoire embarquée ou refuser la trajectoire embarquée en fonction de la trajectoire distante et pour transmettre le résultat de la validation au dispositif embarqué 14. Dans un mode de réalisation alternatif et préféré, le module 24 de validation de trajectoire est distinct et indépendant du dispositif distant 12.

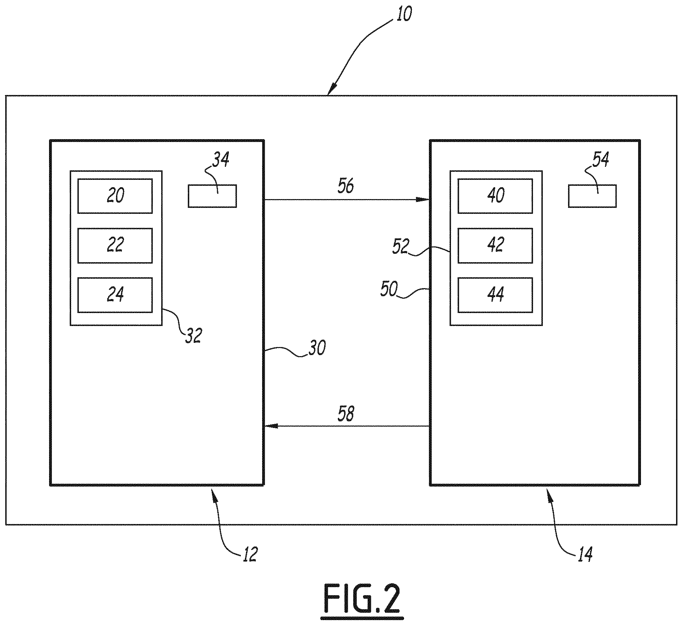

Comme représenté sur la figure 2, le dispositif distant est un dispositif électronique programmable, par exemple un ordinateur, et comprend par exemple une unité de traitement d'informations 30 formée par exemple d'une mémoire 32 associée à un processeur 34. De plus, le dispositif distant 12 comprend ou est connecté à une interface de communication radio distante, adaptée à émettre et à recevoir des communications radio. En outre, le dispositif distant 12 est connecté à l'interface utilisateur 19.

Dans un mode de réalisation, le module d'acquisition distant 20, le module de calcul distant 22 et le module de validation de trajectoire 24 sont réalisés chacun sous forme d'un logiciel exécutable par le processeur 34. La mémoire 32 est alors apte à stocker un logiciel d'acquisition distant de données de plan de vol, un logiciel de calcul distant d'une trajectoire distante en fonction des données de plan de vol acquises par le logiciel d'acquisition distant et un logiciel de validation de trajectoire configuré pour acquérir la trajectoire distante et une trajectoire embarquée transmise par le dispositif embarqué 14, pour valider la trajectoire embarquée ou refuser la trajectoire embarquée en fonction de la trajectoire distante et pour transmettre le résultat de la validation au dispositif embarqué 14. Le processeur 34 de l'unité de traitement d'informations 30 est alors apte à exécuter le logiciel d'acquisition distant, le logiciel de calcul distant et le logiciel de validation de trajectoire.

En variante, le module d'acquisition distant 20, le module de calcul distant 22 et le module de validation de trajectoire 24 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit).*

Lorsque le dispositif distant 12 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Le dispositif distant complémentaire 15 est semblable au dispositif distant 12 précédemment décrit, il est fonctionnellement redondant et utilisé pour améliorer la sécurité fonctionnement, par exemple en cas de panne.

Le dispositif distant complémentaire 15 comprend un module d'acquisition distant complémentaire 35 semblable au module d'acquisition distant 20, un module de calcul distant complémentaire 36 semblable au module de calcul distant 22 et un par exemple un module de validation de trajectoire 37 semblable au module de validation de trajectoire 24.

Dans la suite de la description, les caractéristiques du module d'acquisition distant 20 s'appliquent au module d'acquisition distant complémentaire 35, les caractéristiques du module de calcul distant 22 s'appliquent au module de calcul distant complémentaire 36 et les caractéristiques du module de validation de trajectoire 24 s'appliquent au module de validation de trajectoire complémentaire 37.

Chaque dispositif embarqué 14 comprend un module 40 d'acquisition embarqué de données de plan de vol, configuré pour acquérir des données de plan de vol acquises par le module d'acquisition distant 20.

Chaque dispositif embarqué 14 comprend un module 42 de calcul embarqué d'une trajectoire embarquée en fonction des données de plan de vol acquises par le module d'acquisition embarqué 40.

Chaque dispositif embarqué 14 comprend de préférence un module de génération 44 configuré pour acquérir le résultat de la validation du module de validation de trajectoire 24 et pour générer des instructions de pilotage adaptées pour être interprétées par un pilote automatique ou des commandes de vol en fonction du résultat de la validation.

Comme représenté sur la figure 2, le dispositif embarqué 14 comprend par exemple une unité de traitement d'informations 50 formée par exemple d'une mémoire 52 associée à un processeur 54. De plus, le dispositif embarqué 14 comprend ou est connecté à une interface de communication radio, adaptée à émettre et à recevoir des communications radio.

Dans l'exemple de la figure 2, le module d'acquisition embarqué 40, le module de calcul embarqué 42 et, de préférence le module de génération embarqué 44 sont réalisés chacun sous forme d'un logiciel exécutable par le processeur 54. La mémoire 52 est alors apte à stocker un logiciel d'acquisition embarqué de données de plan de vol, un logiciel de calcul embarqué d'une trajectoire embarquée en fonction des données de plan de vol acquises par le logiciel d'acquisition embarqué et un logiciel de génération configuré pour acquérir le résultat de la validation du module de validation de trajectoire 24 et pour générer des instructions de pilotage adaptées pour être interprétées par un pilote automatique ou des commandes de vol en fonction du résultat de la validation. Le processeur 54 de l'unité de traitement d'informations 50 est alors apte à exécuter le logiciel d'acquisition embarqué, le logiciel de calcul embarqué et le logiciel de génération.

En variante non représentée, le module d'acquisition embarqué 40, le module de calcul embarqué 42 et le module génération 44 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit).*

Lorsque le dispositif embarqué est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un programme d'ordinateur comprenant des instructions logicielles.

Le module d'acquisition distant 20 est configuré pour acquérir des données de plan de vol, par exemple pour acquérir des données de plan de vol saisies par un utilisateur.

Le module d'acquisition distant 20 est avantageusement connecté à l'interface utilisateur 19 et est configuré pour acquérir des données de plan de vol saisies sur l'interface utilisateur 19. En variante, le module d'acquisition distant 20 est configuré pour acquérir des données de plan de vol stockées sur une mémoire externe au système de commande 10, par exemple désignées par l'intermédiaire de l'interface utilisateur 19.

Les données de plan de vol acquises par le module d'acquisition distant 20 correspondent par exemple à des points de passage désirés de l'aéronef 11. En particulier, les données de plan de vol comprennent les coordonnées d'un aéroport de départ et d'un aéroport d'arrivée, des procédures de départ et d'arrivée, des points tournants et des routes aériennes. Les données de plan de vol comprennent par exemple également des paramètres de masse, de centrage, de fuel, de niveaux de vol et de météorologie.

Le module d'acquisition distant 20 est configuré pour transmettre les données de plan de vol au module d'acquisition embarqué 40, par exemple par l'intermédiaire d'une transmission radio, telle une transmission radio de commande 56, comme représenté en figure 1.

Le module d'acquisition distant 20 est par exemple configuré pour transmettre les données de plan de vol au module d'acquisition distant complémentaire 35.

Le bloc de contrôle distant 16 est configuré pour sélectionner le dispositif distant utilisé parmi le dispositif distant 12 et le dispositif distant complémentaire 15. Le bloc de contrôle distant 16 est par exemple configuré pour sélectionner le dispositif distant 12 comme dispositif distant utilisé par défaut. En cas de défaillance du dispositif distant 12, et comme la fonction et la structure du dispositif distant complémentaire 15 est semblable à la fonction et à la structure du dispositif distant 12, le bloc de contrôle 16 est configuré pour sélectionner le dispositif distant complémentaire 15 comme dispositif distant utilisé. Le bloc de contrôle distant 16 est de préférence configuré pour détecter une défaillance du dispositif distant 12 de façon autonome et pour sélectionner automatiquement le dispositif distant complémentaire 15 comme dispositif distant utilisé.

Le module de calcul distant 22 est configuré pour calculer une trajectoire en trois dimensions spatiales et une dimension temporelle qui est volable par l'aéronef 11.

Le module de calcul distant 22 est en particulier configuré pour calculer une trajectoire distante composée de segments droits et d'arcs de cercle cohérents avec les performances de l'aéronef 11. La trajectoire est en particulier dépendante de la position de l'aéronef, de sa vitesse, mais aussi des données extérieures à l'aéronef telles les données météorologiques.

Le module de calcul distant 22 est configuré pour transmettre la trajectoire distante au module de validation de trajectoire 24.

Le module d'acquisition embarqué 40 est configuré pour recevoir les données de plan de vol du module d'acquisition distant 20, par exemple par l'intermédiaire de la transmission radio de commande 56.

Le module de calcul embarqué 42 est configuré pour calculer une trajectoire embarquée en trois dimensions spatiales et une dimension temporelle qui est volable par l'aéronef 11.

Le module de calcul embarqué 42 est en particulier configuré pour calculer une trajectoire composée de segments droits et d'arcs de cercle cohérents avec les performances de l'aéronef 11. La trajectoire est en particulier dépendante de la position de l'aéronef, de sa vitesse, mais aussi des données extérieures à l'aéronef telles les données météorologiques.

Le module de calcul embarqué 42 est configuré pour calculer une trajectoire suivant les mêmes conventions que la trajectoire calculée par le module de calcul distant 22.

Le bloc de contrôle embarqué 17 est avantageusement configuré pour comparer entre eux les calculs des dispositifs embarqués 14. Cette comparaison peut se faire en comparant chacune des trajectoires embarquées calculées par chacun des modules de calcul embarqués 42 des dispositifs embarqués 14. Le bloc de contrôle embarqué 17 est par exemple configuré pour calculer l'écart moyen entre chacune des trajectoires calculées par chacun des modules de calcul embarqués 42. Le bloc de contrôle embarqué 17 est alors configuré pour déterminer si une trajectoire calculée est pertinente ou non en fonction de l'écart moyen de cette trajectoire avec les autres trajectoires calculées. En particulier, le bloc de contrôle embarqué 17 est configuré pour déterminer une trajectoire comme peu pertinente si l'écart moyen avec l'ensemble des autres trajectoires calculées est significatif. Le bloc de contrôle embarqué 17 est configuré pour déterminer une trajectoire comme pertinente si l'écart moyen avec au moins une autre trajectoire calculée tend vers zéro. Le bloc de contrôle embarqué 17 est par exemple configuré pour sélectionner un dispositif embarqué 14 comme dispositif principal tant que la trajectoire générée par ledit dispositif embarqué 14 est pertinente. Le bloc de contrôle embarqué 17 est par exemple configuré pour changer de dispositif principal dès que la trajectoire générée par le dispositif embarqué 14 principal est peu pertinente. En particulier, le bloc de contrôle embarqué 17 est alors configuré pour sélectionner un dispositif embarqué 14 calculant une trajectoire pertinente

En variante, la comparaison des calculs des dispositifs embarqués 14 peut se faire en comparant chacune des consignes élaborées par les modules de génération 44 de chacun des dispositifs embarqués 14. Le bloc de contrôle embarqué 17 est alors configuré pour déterminer si une consigne élaborée par les modules de génération 44 est pertinente ou non en fonction de l'écart de cette consigne avec les consignes des autres dispositifs embarqués. Par exemple une commande de roulis issue du module de génération 44 sera invalide si l'écart avec les autres commandes de roulis est supérieure à 5 degrés pendant 3 secondes.

Le choix du dispositif embarqué principal est alors fonction de la trajectoire embarquée de chacun des dispositifs embarqués 14. Le module de calcul embarqué 42 du dispositif principal est alors configuré pour transmettre la trajectoire embarquée au module de validation de trajectoire 24. Le module de calcul embarqué 42 est par exemple configuré pour transmettre la trajectoire embarquée au module de validation de trajectoire 24 par l'intermédiaire d'une transmission radio de contrôle 58.

Le module de validation de trajectoire 24 comprend selon une première variante une unité 60 d'acquisition d'instructions d'un utilisateur.

Le module de validation de trajectoire 24 comprend selon une deuxième variante une unité 62 de comparaison de la trajectoire embarquée et de la trajectoire distante.

Le module de validation de trajectoire 24 comprend selon une troisième variante à la fois une unité 60 d'acquisition d'instructions d'un utilisateur et à la fois une unité 62 de comparaison de la trajectoire embarquée et de la trajectoire distante.

L'unité 60 d'acquisition d'instructions de l'utilisateur est configurée pour acquérir des instructions de l'utilisateur et pour valider ou pour refuser la trajectoire embarquée en fonction des instructions de l'utilisateur.

L'unité d'acquisition d'instructions 60 est par exemple connectée à l'interface utilisateur 19. En particulier, l'unité d'acquisition d'instructions 60 est configurée pour générer des données d'interface 64 et acquérir des instructions saisies par l'utilisateur sur l'interface utilisateur 19.

L'unité d'acquisition d'instructions 60 est en particulier configurée pour générer des données d'interface 64 destinées à être transmises à l'interface utilisateur 19.

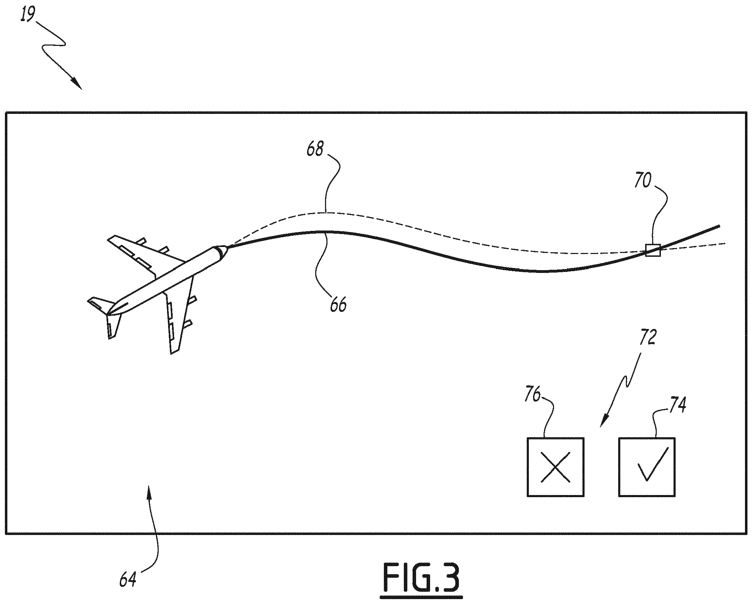

Comme illustré en figure 3, les données d'interface 64 comprennent par exemple des données affichables telles des données de trajectoire distante 66, des données de trajectoire embarquée 68 et des données de plan de vol 70.

Dans la variante présentée en figure 3, l'interface utilisateur 19 est un écran tactile. Les données d'interface 64 comprennent alors des données de contrôle 72 comprenant des données de validation 74 et des données de refus 76.

L'unité d'acquisition d'instructions 60 est alors configurée pour valider la trajectoire embarquée lorsque l'utilisateur interagit avec les données de validation 74 et pour refuser la trajectoire embarquée lorsque l'utilisateur interagit avec les données de refus 76.

L'unité d'acquisition d'instructions 60 est par exemple configurée pour transmettre le résultat de la validation au dispositif embarqué 14.

L'unité 62 de comparaison de la trajectoire embarquée et de la trajectoire distante est configurée pour comparer l'écart entre la trajectoire embarquée et la trajectoire distante, et pour valider ou refuser la trajectoire embarquée en fonction de l'écart entre la trajectoire embarquée et la trajectoire distante par rapport à une valeur d'écart seuil prédéfini.

L'unité de comparaison 62 est par exemple configurée pour comparer l'écart entre la trajectoire embarquée et la trajectoire distante en calculant l'erreur entre la trajectoire embarquée et la trajectoire distante. L'erreur calculée par l'unité de comparaison 62 correspond par exemple à une valeur d'écart type entre des points de la trajectoire embarquée calculée et la trajectoire distante. L'unité de comparaison 62 est par exemple configurée pour refuser la trajectoire embarquée lorsque l'erreur excède une valeur seuil critique.

En variante, l'unité de comparaison 62 est par exemple configurée pour comparer l'écart entre la trajectoire embarquée et la trajectoire distante en calculant l'écart maximal, c'est-à-dire la distance maximale, entre la trajectoire distante et la trajectoire embarquée. L'unité de comparaison 62 est par exemple configurée pour refuser la trajectoire embarquée lorsque l'écart maximal excède une valeur d'écart seuil prédéfini. La valeur d'écart seuil prédéfini est par exemple, dans cette variante, égale à 10 m pour une trajectoire droite référencée géographiquement en base de données ou 40 m pour une trajectoire courbe référencée géographiquement en base de données. Elle sera supérieure si la trajectoire n'est pas géo-référencée en base de données ou si le niveau de performance d'une procédure ne le nécessite pas.

Selon la troisième variante dans laquelle le module de validation 24 comprend à la fois l'unité d'acquisition d'instructions 60 et l'unité de comparaison 62, l'unité de comparaison 62 est par exemple configurée pour effectuer une première validation en validant ou en refusant la trajectoire embarquée en fonction de la trajectoire distante tel que décrit précédemment. L'unité de comparaison est alors adaptée à transmettre la trajectoire validée une première fois par l'unité de comparaison 62 à l'unité d'acquisition d'instructions 60, l'unité d'acquisition d'instruction étant alors configurée pour valider ou pour refuser la trajectoire validée par l'unité de comparaison 62 en fonction des instructions de l'utilisateur.

Le module de validation de la trajectoire 24 est configuré pour transmettre le résultat de la validation au dispositif embarqué 14 de gestion de vol, par exemple au bloc de contrôle embarqué 17 ou au module de génération 44.

Le module de validation de la trajectoire 24 est par exemple configuré pour transmettre une donnée de validation au dispositif embarqué 14 lorsque la trajectoire embarquée est validée. En variante, le module de validation de la trajectoire 24 est configuré pour ne transmettre aucune donnée lorsque la trajectoire embarquée 14 est validée.

Le module de validation de la trajectoire 24 est par exemple configuré pour transmettre une donnée de refus au dispositif embarqué 14 lorsque la trajectoire embarquée est refusée. Le module de validation de la trajectoire 24 est configuré, en variante ou en complément à transmettre des données d'alternative au dispositif embarqué. Les données transmises par le module de validation de la trajectoire 24 vers le dispositif embarqué 14 sont par exemple transmises par l'intermédiaire de la transmission radio de commande 56.

Le module de génération 44 est configuré pour générer des instructions de pilotage en fonction d'une trajectoire. En particulier, le module de génération 44 est configuré pour générer des instructions telles des instructions d'angle pour les surfaces mobiles de l'aéronef 11 ou des instructions de poussée pour les propulseurs de l'aéronef 11. Le module de génération est configuré pour générer des instructions de pilotage à partir du résultat de la validation transmis par le module de validation 24.

Le module de génération 44 est configuré pour acquérir le résultat de la validation transmis par le module de validation 24.

Le module de génération 44 est configuré pour, si la trajectoire embarquée est validée par le module de validation 24, générer des instructions de pilotage en fonction de la trajectoire embarquée validée.

Le module de génération 44 est alors par exemple configuré pour générer des instructions de pilotage directement en fonction du module de calcul embarqué 42, et par exemple en fonction de la trajectoire embarquée calculée par le module de calcul embarqué 42 du dispositif distant 12 choisi comme dispositif embarqué principal par le bloc de contrôle embarqué 17.

Le module de génération 44 est configuré pour, si la trajectoire embarquée est refusée par le module de validation 24, générer des instructions de pilotage en fonction de la dernière trajectoire embarquée validée et mémorisée dans la mémoire 52, ou en fonction d'une trajectoire embarquée de contingence, ou en fonction d'instructions de pilotage directement transmises depuis le dispositif distant 12 de gestion de vol.

Le module de génération 44 est par exemple configuré pour, suite à la réception d'une donnée de refus de la part du module de validation 24, générer des instructions de pilotage à partir de la dernière trajectoire embarquée validée du module de calcul embarqué 42 du dispositif embarqué 14 principal.

En variante ou en complément, le module de génération 44 est par exemple configuré pour, si la trajectoire embarquée est refusée par le module de validation 24, générer des instructions de pilotage en fonction d'une trajectoire de contingence enregistrées dans l'aéronef 11, préenregistrée ou reçue du dispositif distant 12. Une telle trajectoire de contingence est par exemple la trajectoire d'un vol vers un aéroport de base prédéterminé ou la trajectoire d'un circuit d'attente.

En variante ou en complément, le module de génération 44 est par exemple configuré pour, si la trajectoire embarquée est refusée par le module de validation 24, générer des instructions de pilotage en fonction d'instructions directement saisies par l'utilisateur par l'intermédiaire de l'interface utilisateur 19, et reçues du dispositif distant 12 via la transmission radio de commande 56.

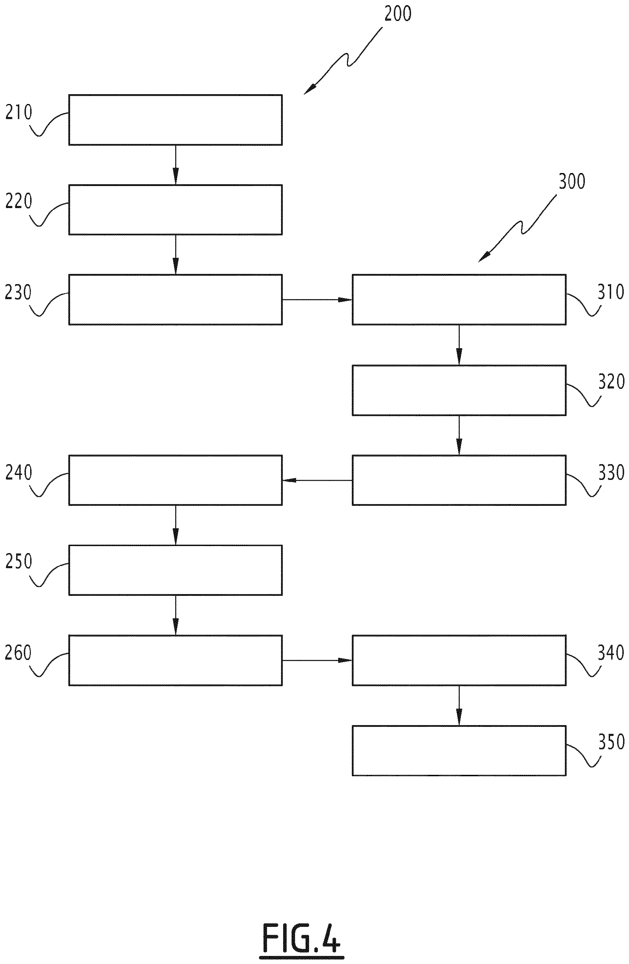

Sur la figure 4 sont présentées les étapes d'un procédé 200 distant de commande d'un aéronef sans pilote à bord 11, de préférence mis en oeuvre par un dispositif distant 12 tel que précédemment décrit, et les étapes d'un procédé 300 embarqué de commande d'un aéronef sans pilote à bord 11, de préférence mis en oeuvre par un dispositif embarqué 14, tel que précédemment décrit.

Lors d'une étape 210 d'acquisition distante de données de plan de vol du procédé distant 200, le module d'acquisition distant 20 acquiert des données de plan de vol. Ces données de plan de vol sont par exemple acquises par le module d'acquisition distant par l'intermédiaire de l'interface utilisateur 19.

A la suite de l'étape 210 d'acquisition, le module de calcul distant 22 calcule, lors d'une étape 220 de calcul d'une trajectoire distante du procédé distant 200, une trajectoire distante. En particulier, le module de calcul distant 22 calcule la trajectoire distante en fonction des données de plan de vol acquises par le module d'acquisition distant 20 lors de l'étape 210 d'acquisition distante de données de plan de vol.

A la suite de l'étape 220 de calcul d'une trajectoire distante, ou en variante, avant ou pendant l'étape de calcul 220, le dispositif distant 12 transmet les données de plan de vol, acquises lors de l'étape d'acquisition 210, au dispositif embarqué 14 lors d'une étape de transmission de données de plan de vol 230 du procédé distant 200. La transmission est par exemple une transmission radio, telle la transmission radio de commande 56.

A la suite de l'étape de transmission 230, le module d'acquisition embarqué 40 acquiert les données de plan de vol acquises lors de l'étape 210 lors d'une étape 310 d'acquisition embarquée de données de plan de vol du procédé embarqué 300.

A la suite de l'étape d'acquisition embarquée 310, le module de calcul distant 22 calcule une trajectoire embarquée lors d'une étape de calcul d'une trajectoire embarquée 320 du procédé embarqué 300.

A la suite de l'étape de calcul d'une trajectoire embarquée 320, le dispositif embarqué transmet la trajectoire embarquée, calculée lors de l'étape 320, lors d'une étape 330 de transmission de la trajectoire embarquée du procédé embarqué 300. La transmission est par exemple une transmission radio telle la transmission radio de contrôle 58. Dans le mode de réalisation où plusieurs dispositifs embarqués 14 calculent chacun une trajectoire embarquée, la trajectoire embarquée du module embarqué 14 principal est par exemple transmise au dispositif distant 12 lors de l'étape 330 de transmission de la trajectoire embarquée.

A la suite de l'étape de calcul de la trajectoire embarquée 320, le module de de validation 24 acquiert la trajectoire distante, calculée lors de l'étape de calcul d'une trajectoire distante 220, ainsi que la trajectoire embarquée, calculée lors de l'étape de calcul 320 d'une trajectoire embarquée. Le module de validation 24 acquiert les trajectoires distante et embarquée lors d'une étape 240 d'acquisition de la trajectoire distante et de la trajectoire embarquée du procédé distant 200.

A la suite de l'étape d'acquisition 240 de la trajectoire distante et de la trajectoire embarquée, le module de validation valide ou refuse la trajectoire embarquée en fonction de la trajectoire distante lors d'une étape validation ou refus de la trajectoire embarquée 250 du procédé distant 200. Lors de cette étape, l'unité 60 d'acquisition d'instructions de l'utilisateur et/ou l'unité de comparaison 62 fournissent une validation ou un refus de la trajectoire embarquée.

A la suite de l'étape 250 de validation ou refus de la trajectoire embarquée, le dispositif distant 12 transmet le résultat de l'étape de validation ou refus 250 lors d'une étape de transmission du résultat de la validation 260 du procédé distant 200. Lors de l'étape 260 de transmission du résultat de la validation, le module de validation 24 est par exemple configuré pour transmettre une donnée de validation ou aucune donnée si la trajectoire embarquée est validée. Lors de l'étape 260 de transmission du résultat de la validation, le module de variation est par exemple configuré pour transmettre une donnée de refus si la trajectoire embarquée est refusée. La transmission est par exemple une transmission radio telle la transmission radio de commande 56.

A la suite de l'étape 260 de transmission du résultat de la trajectoire, le module de génération 44 acquiert le résultat de validation de la trajectoire transmis lors de l'étape 260. Le module de génération 44 acquiert ce résultat lors d'une étape 340 d'acquisition d'un résultat de validation de trajectoire du procédé embarqué 300.

A la suite de l'étape 340 d'acquisition d'un résultat de validation de trajectoire, le module de génération 44 génère des instructions de pilotage lors d'une étape 350 de génération d'instructions de pilotage du procédé embarqué 300. Lors de cette étape, le module de génération 44 génère des instructions de pilotage en fonction de la trajectoire validée si la trajectoire embarquée est validée lors de l'étape 250 de validation ou refus de la trajectoire embarquée. Lors de cette étape, et si la trajectoire embarquée est refusée lors de l'étape 250 de validation ou refus de la trajectoire embarquée, le module de génération 44 génère des instructions de pilotage en fonction de la dernière trajectoire embarquée validée, d'une trajectoire embarquée de contingence ou d'instructions de pilotage directement transmises depuis le dispositif distant 16.

Avantageusement, le système 10 électronique de commande d'un aéronef sans pilote à bord et les procédés de commande d'un aéronef sans pilote à bord distant 200 et embarqué 300 assurent une haute intégrité de la trajectoire embarquée, notamment grâce à la validation d'une trajectoire embarquée calculée dans l'aéronef sans pilote à bord en fonction d'une trajectoire distance calculée dans une station de contrôle.

En particulier, le module de validation 24 est particulièrement avantageux pour améliorer l'intégrité de la trajectoire embarquée puisqu'il permet de comparer une trajectoire calculée dans l'aéronef 11 et une trajectoire calculée hors de l'aéronef 11 afin de vérifier que ces trajectoires sont semblables, selon une valeur d'écart seuil prédéfinie.

Un module de validation 24 comprenant une unité 60 d'acquisition d'instructions d'un utilisateur est particulièrement avantageuse puisqu'elle permet d'assurer un contrôle de la trajectoire embarquée par un utilisateur hors de l'aéronef, assurant ainsi que la trajectoire embarquée dans l'aéronef 11 soit conforme aux attentes de l'utilisateur.

Un module de validation 24 comprenant une unité 62 de comparaison est avantageuse puisqu'elle facilite la vérification de la trajectoire embarquée et limite les erreurs humaines lors du contrôle de la trajectoire embarquée.

Le module de génération 44 configuré pour acquérir le résultat de la validation du module de validation 24 permet à l'aéronef de suivre une trajectoire qui a été approuvée par l'utilisateur. Le choix de la trajectoire approuvée parmi une trajectoire validée, une trajectoire précédemment validée, une trajectoire de contingence ou une trajectoire directement engendrée par des instructions de pilotage transmises depuis le dispositif 12 distant de gestion du vol est particulièrement avantageux pour améliorer la disponibilité et l'intégrité de la trajectoire embarquée lorsque la trajectoire est refusée par le module de validation 24.

L'utilisation de trois dispositifs embarqués est particulièrement avantageuse pour améliorer la disponibilité et l'intégrité de la trajectoire embarquée, assurant notamment qu'une trajectoire intègre est fournie au pilote automatique ou aux commandes de vol.

Un dispositif distant complémentaire 15 est par ailleurs avantageux puisqu'il permet une redondance de l'équipement au sol, améliorant la disponibilité de cette trajectoire embarquée depuis le dispositif distant qui permet de vérifier son intégrité.

## Revendications

1. Système électronique (10) de commande d'un aéronef sans pilote à bord (11), le système (10) comprenant :
- un dispositif distant (12) de gestion de vol de l'aéronef (11) adapté à communiquer à distance avec l'aéronef (11) et comprenant :
- un module d'acquisition distant (20) de données de plan de vol, et
- un module de calcul distant (22) d'une trajectoire ou d'une consigne distante en fonction des données de plan de vol acquises par le module d'acquisition distant (20) ; et
- au moins un dispositif embarqué (14) de gestion de vol de l'aéronef (11), embarqué à bord de l'aéronef (11), le dispositif embarqué (14) comprenant :
- un module d'acquisition embarqué (40) de données de plan de vol, configuré pour acquérir les données de plan de vol acquises par le module d'acquisition distant (20), et
- un module de calcul embarqué (42) d'une trajectoire ou d'une consigne embarquée en fonction des données de plan de vol acquises par le module d'acquisition embarqué (40) ;
le dispositif distant (12) comprenant un module de validation de trajectoire (24) configuré pour :
- acquérir la trajectoire ou consigne embarquée et la trajectoire ou consigne distante ;
- valider la trajectoire ou consigne embarquée ou refuser la trajectoire ou consigne embarquée en fonction de la trajectoire ou consigne distante ; et
- transmettre le résultat de la validation au dispositif embarqué (14) de gestion de vol ;
le dispositif embarqué (14) comprenant un module de génération (44) configuré pour acquérir le résultat de la validation du module de validation de trajectoire ou consigne et pour générer des instructions de pilotage, adaptées pour être interprétées par un pilote-automatique, en fonction du résultat de la validation ;
**caractérise en ce que** le système comporte au moins trois dispositifs embarqués (14) de gestion de vol d'un aéronef (11), et dans lequel le système (10) est configuré pour choisir un dispositif embarqué (14) principal pour générer les instructions de pilotage, le choix du dispositif embarqué (14) principal étant fonction de la trajectoire ou consigne embarquée calculée par chacun des dispositifs embarqués (14).

2. Système (10) selon la revendication 1, dans lequel le module de validation (24) comprend une unité d'acquisition (60) d'instructions d'un utilisateur, l'unité d'acquisition (60) d'instruction de l'utilisateur étant configurée pour acquérir des instructions de l'utilisateur et pour valider ou pour refuser la trajectoire ou consigne embarquée en fonction des instructions de l'utilisateur.

3. Système (10) selon la revendication 1, dans lequel le module de validation (24) comprend une unité de comparaison (62) de la trajectoire ou consigne embarquée et de la trajectoire ou consigne distante, l'unité de comparaison (62) étant configurée pour comparer un écart entre la trajectoire ou consigne embarquée et la trajectoire ou consigne distante, et pour valider ou refuser la trajectoire ou consigne embarquée en fonction de l'écart entre la trajectoire ou consigne embarquée et la trajectoire ou consigne distante par rapport à une valeur d'écart seuil prédéfinie.

4. Système (10) selon l'une quelconque des revendications précédentes, dans lequel le module de génération (44) est configuré pour :
- si la trajectoire ou consigne embarquée est validée par le module de validation (24), générer des instructions de pilotage en fonction de la trajectoire embarquée validée ; et
- si la trajectoire ou consigne embarquée est refusée par le module de validation (24), générer des instructions de pilotage en fonction :
- de la dernière trajectoire ou consigne embarquée validée ; ou
- d'une trajectoire ou consigne embarquée de contingence ; ou
- d'instructions de pilotage directement transmises depuis le dispositif distant (12) de gestion de vol.

5. Système (10) selon l'une quelconque des revendications précédentes, dans lequel le système comprend au moins un dispositif distant complémentaire (15) de gestion de vol d'un aéronef (11), le dispositif distant complémentaire (15) comprenant :
- un module d'acquisition distant complémentaire (35), configuré pour acquérir les données de plan de vol acquises par le module d'acquisition distant (20), et
- un module de calcul distant complémentaire (36) d'une trajectoire ou consigne distante complémentaire en fonction des données de plan de vol acquises par le module d'acquisition distant complémentaire (35),
les données de plan de vol acquises par le module d'acquisition embarqué (40) étant fournies soit par le module d'acquisition distant (20), soit par le module d'acquisition distant complémentaire (35).

6. Procédé distant (200) de commande d'un aéronef sans pilote à bord (11), le procédé (200) étant mis en oeuvre par un dispositif distant (12) de gestion de vol d'un système électronique (10) de commande d'un aéronef sans pilote à bord (11) conforme aux revendications 1 à 5, et comportant les étapes suivantes :
- acquisition distante de données de plan de vol (210),
- calcul d'une trajectoire ou consigne distante (220) en fonction des données de plan de vol acquises,
- transmission des données de plan de vol (230) au dispositif embarqué (14) de gestion de vol,
- acquisition de la trajectoire ou consigne distante et d'une trajectoire ou consigne embarquée (240), la trajectoire ou consigne embarquée étant transmise par le dispositif embarqué (14) de gestion de vol,
- validation ou refus de la trajectoire ou consigne embarquée (250) en fonction de la trajectoire ou consigne distante, et
- transmission du résultat de la validation (260) de la trajectoire ou consigne embarquée au dispositif embarqué (14).

7. Programme d'ordinateur comportant des instructions logicielles qui, lorsqu'elles sont exécutées par un dispositif distant (12) de gestion de vol d'un système électronique (10) de commande d'un aéronef sans pilote à bord (11) conforme aux revendications 1 à 5, mettent en oeuvre un procédé distant (200) de commande d'aéronef sans pilote à bord (11) selon la revendication 6.

8. Procédé embarqué (300) de commande d'un aéronef sans pilote à bord (11), le procédé (300) étant mis en oeuvre par un dispositif embarqué (14) de gestion de vol d'un système électronique (10) de commande d'un aéronef (11) sans pilote à bord conforme aux revendications 1 à 5, et comprenant les étapes suivantes :
- acquisition embarquée (310) de données de plan de vol transmises par le dispositif distant (12) de gestion de vol,
- calcul d'une trajectoire ou consigne embarquée (320) en fonction des données de plan de vol acquises,
- transmission de la trajectoire ou consigne embarquée (330) au dispositif distant (12) de gestion de vol,
- acquisition d'un résultat de validation de trajectoire ou consigne (340), le résultat étant transmis par le dispositif distant de gestion de vol (12), et
- génération d'instructions de pilotage (350) en fonction du résultat de validation de trajectoire ou consigne.

9. Programme d'ordinateur comportant des instructions logicielles qui, lorsqu'elles sont exécutées par un dispositif embarqué (14) de gestion de vol d'un système électronique (10) de commande d'un aéronef (11) sans pilote à bord conforme aux revendications 1 à 5, mettent en oeuvre un procédé embarqué (300) de commande d'aéronef sans pilote à bord (11) selon la revendication 8.

## Patentansprüche

1. Elektronisches System (10) zur Steuerung eines unbemannten Luftfahrzeugs (11) an Bord, wobei das System (10) umfasst:
- eine entfernte Vorrichtung (12) zur Flugsteuerung des Luftfahrzeugs (11), die dazu geeignet ist, mit dem Luftfahrzeug (11) fernzukommunizieren, und die umfasst:
- ein entferntes Erfassungsmodul (20) für Flugplandaten und
- ein entferntes Berechnungsmodul (22) einer entfernten Flugbahn oder eines entfernten Sollwerts auf der Grundlage der von dem entfernten Erfassungsmodul (20) erfassten Flugplandaten; und
- mindestens eine an Bord des Luftfahrzeugs (11) befindliche Vorrichtung (14) zur Flugsteuerung des Luftfahrzeugs (11), wobei die an Bord befindliche Vorrichtung (14) umfasst:
- ein an Bord befindliches Erfassungsmodul (40) für Flugplandaten, das so konfiguriert ist, dass es die von dem entfernten Erfassungsmodul (20) erfassten Flugplandaten erfasst, und
- ein bordeigenes Berechnungsmodul (42) einer Flugbahn oder eines bordeigenen Sollwerts in Abhängigkeit von den Flugplandaten, die von dem an Bord befindlichen Erfassungsmodul (40) erfasst werden;
die entfernte Vorrichtung (12) ein Modul zur Validierung der Flugbahn (24) umfasst, das konfiguriert ist, um:
- bordeigene oder entfernte Flugbahn oder Sollwert zu erfassen;
- bordeigene oder entfernte Flugbahn oder Sollwert zu bestätigen oder bordeigene oder entfernte Flugbahn oder Sollwert auf der Grundlage der entfernten Flugbahn oder des entfernten Sollwerts abzulehnen; und
- das Ergebnis der Validierung an das Bordgerät (14) zur Flugsteuerung zu übermitteln;
wobei das Bordgerät (14) ein Generierungsmodul (44) umfasst, das so konfiguriert ist, dass es das Ergebnis der Validierung des Moduls zur Validierung der Flugbahn oder des Sollwerts erfasst und Steueranweisungen erzeugt, die so beschaffen sind, dass sie von einem Autopiloten interpretiert werden können, und zwar in Abhängigkeit von dem Ergebnis der Validierung;
**dadurch gekennzeichnet, dass** das System mindestens drei Bordgeräte (14) zur Steuerung des Fluges eines Luftfahrzeugs (11) umfasst, und wobei das System (10) so konfiguriert ist, dass es ein Bordgerät (14) als Hauptgerät zur Erzeugung der Steueranweisungen auswählt, wobei die Wahl des Hauptbordgeräts (14) in Abhängigkeit von der von jedem der Bordgeräte (14) berechneten Flugbahn oder des Bordsollwerts erfolgt.

2. System (10) nach Anspruch 1, wobei das Validierungsmodul (24) eine Einheit zum Erfassen (60) von Anweisungen eines Benutzers umfasst, wobei die Einheit zum Erfassen (60) von Anweisungen des Benutzers so konfiguriert ist, dass sie Anweisungen des Benutzers erfasst und bordeigene Flugbahn oder Sollwert in Abhängigkeit von den Anweisungen des Benutzers validiert oder ablehnt.

3. System (10) nach Anspruch 1, wobei das Validierungsmodul (24) eine Vergleichseinheit (62) für bordeigene Flugbahn oder Sollwert und entfernte Flugbahn oder Sollwert umfasst, wobei die Vergleichseinheit (62) so konfiguriert ist, dass sie eine Abweichung zwischen bordeigener Flugbahn oder Sollwert und entfernter Flugbahn oder Sollwert vergleicht und um die Validierung von bordeigener Flugbahn oder Sollwert in Abhängigkeit von der Abweichung zwischen bordeigener Flugbahn oder Sollwert und entfernter Flugbahn oder Sollwert von einem vordefinierten Abweichungsschwellenwert zu validieren oder zu verweigern.

4. System (10) nach einem der vorherigen Ansprüche, wobei das Generierungsmodul (44) zu Folgendem konfiguriert ist:
- wenn bordeigene Flugbahn oder Sollwert durch das Validierungsmodul (24) validiert wird, Erzeugen von Steueranweisungen in Abhängigkeit von der validierten bordeigenen Flugbahn; und
- wenn bordeigene Flugbahn oder Sollwert vom Validierungsmodul (24) abgelehnt wird, Erzeugen von Steueranweisungen in Abhängigkeit von:
- zuletzt bestätigter bordeigener Flugbahn oder Sollwert; oder
- bordeigener Kontingenzflugbahn oder -sollwert; oder
- von Fluganweisungen, die direkt von der entfernten Vorrichtung (12) zur Flugsteuerung übertragen werden.

5. System (10) nach einem der vorhergehenden Ansprüche, wobei das System mindestens eine komplementäre entfernte Vorrichtung (15) zur Flugsteuerung eines Luftfahrzeugs (11) umfasst, wobei die komplementäre entfernte Vorrichtung (15) umfasst:
- ein komplementäres entferntes Erfassungsmodul (35), das so konfiguriert ist, dass es die vom entfernten Erfassungsmodul (20) erfassten Flugplandaten erfasst, und
- ein komplementäres entferntes Berechnungsmodul (36) einer komplementären entfernten Flugbahn oder eines Sollwerts auf der Grundlage der Flugplandaten, die von dem komplementären entfernten Erfassungsmodul (35) erfasst wurden,
wobei die vom an Bord befindlichen Erfassungsmodul (40) erfassten Flugplandaten entweder vom entfernten Erfassungsmodul (20) oder vom ergänzenden entfernten Erfassungsmodul (35) bereitgestellt werden.

6. Entferntes Verfahren (200) zur Steuerung eines unbemannten Luftfahrzeugs an Bord (11), wobei das Verfahren (200) von einer entfernten Vorrichtung (12) zur Flugsteuerung eines elektronischen Systems (10) zur Steuerung eines unbemannten Luftfahrzeugs an Bord (11) gemäß den Ansprüchen 1 bis 5 implementiert wird und die folgenden Schritte umfasst:
- entfernte Erfassung von Flugplandaten (210),
- Berechnung einer entfernten Flugbahn oder eines entfernten Sollwerts (220) auf der Grundlage der erfassten Flugplandaten,
- Übertragung der Flugplandaten (230) an das Bordgerät (14) zur Flugsteuerung,
- Erfassung der entfernten Flugbahn oder des entfernten Sollwerts und einer bordeigenen Flugbahn oder eines an Bord befindlichen Sollwerts (240), wobei die bordeigene Flugbahn oder der bordeigene Sollwert vom Bordgerät (14) zur Flugsteuerung übertragen wird,
- Validierung oder Ablehnung von bordeigener Flugbahn oder Sollwert (250) in Abhängigkeit von entfernter Flugbahn oder Sollwert, und
- Übertragung des Ergebnisses der Validierung (260) von bordeigener Flugbahn oder Sollwert an das Bordgerät (14).

7. Computerprogramm mit Softwarebefehlen, die, wenn sie von einer entfernten Vorrichtung (12) zur Flugsteuerung eines elektronischen Systems (10) zur Steuerung eines unbemannten Luftfahrzeugs (11) gemäß den Ansprüchen 1 bis 5 ausgeführt werden, ein entferntes Verfahren (200) zur Steuerung des unbemannten Luftfahrzeugs an Bord (11) gemäß Anspruch 6 implementieren.

8. Bordseitiges Verfahren (300) zur Steuerung eines unbemannten Luftfahrzeugs (11), wobei das Verfahren (300) von einem Bordgerät (14) zur Flugsteuerung eines elektronischen Systems (10) zur Steuerung eines unbemannten Luftfahrzeugs (11) gemäß den Ansprüchen 1 bis 5 ausgeführt wird und die folgenden Schritte umfasst:
- bordseitige Erfassung (310) von Flugplandaten, die von der entfernten Vorrichtung (12) zur Flugsteuerung übertragen werden,
- Berechnung einer Flugbahn oder eines bordeigenen Sollwerts (320) auf der Grundlage der erfassten Flugplandaten,
- Übertragung der bordeigenen Flugbahn oder des bordeigenen Sollwerts (330) an die entfernte Vorrichtung (12) zur Flugsteuerung,
- Erfassen eines Validierungsergebnisses für Flugbahn oder Sollwert (340), wobei das Ergebnis von der entfernten Vorrichtung (12) zur Flugsteuerung übertragen wird, und
- Generierung von Steueranweisungen (350) in Abhängigkeit von dem Ergebnis der Validierung von Flugbahn oder Sollwert.

9. Computerprogramm mit Softwarebefehlen, die, wenn sie von einem Bordgerät (14) zur Flugsteuerung eines elektronischen Systems (10) zur Steuerung eines unbemannten Luftfahrzeugs (11) gemäß den Ansprüchen 1 bis 5 ausgeführt werden, ein bordeigenes Verfahren (300) zur Steuerung des unbemannten Luftfahrzeugs (11) gemäß Anspruch 8 implementieren.

## Claims

1. An electronic system (10) for controlling an unmanned aircraft (11), the system (10) comprising:
- a remote device (12) for managing the flight of an aircraft (11), adapted to communicate remotely with the aircraft (11) and comprising:
- a remote module (20) for acquiring flight plan data, and
- a remote module (22) for calculating a remote trajectory or setpoint according to the flight plan data acquired by the remote acquisition module (20); and
- at least one on-board device (14) for managing the flight of the aircraft (11), carried on board the aircraft (11), the on-board device (14) comprising:
- an on-board module (40) for acquiring flight plan data, configured to acquire the flight plan data acquired by the remote acquisition module (20), and
- an on-board module (42) for calculating a remote trajectory or setpoint according to the flight plan data acquired by the on-board acquisition module (40);
the remote device (12) comprising a trajectory validation module (24) configured to:
- acquire the on-board trajectory or setpoint and the remote trajectory or setpoint;
- validate the on-board trajectory or setpoint or reject the on-board trajectory or setpoint based on the remote trajectory or setpoint; and
- transmit the result of the validation to the on-board flight management device (14);
the on-board device (14) comprising a generation module (44) configured to acquire the result of the validation of the trajectory validation module and to generate steering instructions, adapted to be interpreted by an autopilot, according to the result of the validation ;
**characterised in that** the system comprise at least three on-board devices (14) for managing the flight of an aircraft (11), and wherein the system (10) is configured to select a primary on-board device (14) to generate the flight control instructions, the selection of the primary on-board device (14) depending on the on-board trajectory or setpoint calculated by each of the on-board devices (14).

2. The system (10) according to claim 1, wherein the validation module (24) comprises a user instruction acquisition unit (60), the user instruction acquisition unit (60) being configured to acquire instructions from the user and to validate or reject the on-board trajectory or setpoint according to the user instructions.

3. The system (10) according to claim 1, wherein the validation module (24) comprises a unit (62) for comparing the on-board trajectory or setpoint and the remote trajectory or setpoint, the comparison unit (62) being configured to compare a deviation between the on-board trajectory or setpoint and the remote trajectory or setpoint, and to validate or reject the on-board trajectory or setpoint depending on the deviation of the on-board trajectory or setpoint from the remote trajectory or setpoint compared to a predefined threshold deviation value.

4. The system (10) according to any one the preceding claims, wherein the generation module (44) is further configured to:
- if the on-board trajectory or setpoint is validated by the validation module (24), generate steering instructions based on the validated on-board trajectory; and
- if the on-board trajectory or setpoint is rejected by the validation module (24), generate control instructions depending on:
- the last validated on-board trajectory or setpoint; or
- an on-board contingency trajectory or setpoint; or
- flight instructions transmitted directly from the remote flight management device (12).

5. The system (10) according to any of the preceding claims, wherein the system comprises at least one complementary remote device (15) for managing the flight of an aircraft (11), the complementary remote device (15) comprising:
- a complementary remote acquisition module (35), configured to acquire the flight plan data acquired by the remote acquisition module (20), and
- a complementary remote module (36) for calculating a complementary remote trajectory or setpoint according to the flight plan data acquired by the complementary remote acquisition module (35),
the flight plan data acquired by the on-board acquisition module (40) being provided either by the remote acquisition module (20) or by the complementary remote acquisition module (35).

6. A remote method (200) for controlling an unmanned aircraft (11), the method (200) being implemented by a remote flight management device (12) of an electronic system (10) for controlling an unmanned aircraft (11) according to claims 1 to 5, and comprising the following steps:
- remote acquisition of flight plan data (210),
- calculation of a remote trajectory or setpoint (220) based on the acquired flight plan data,
- transmission of flight plan data (230) to the on-board flight management device (14),
- acquisition of the remote trajectory or setpoint and an on-board trajectory or setpoint (240), the on-board trajectory or setpoint being transmitted by the on-board flight management device (14),
- validation or rejection of the on-board trajectory or setpoint (250) according to the remote trajectory or setpoint, and
- transmission of the result of the validation (260) of the trajectory or on-board setpoint to the on-board device (14).

7. A computer program comprising software instructions which, when executed by a remote device (12) for managing the flight of an electronic system (10) for controlling an unmanned aircraft (11) in accordance with the claims 1 to 5, implement a remote method (200) for controlling an unmanned aircraft (11) according to claim 6.

8. A remote method (300) for controlling an unmanned aircraft (11), the method (300) being implemented by a remote flight management device (14) of an electronic system (10) for controlling an unmanned aircraft (11) according to claims 1 to 5, and comprising the following steps:
- on-board acquisition (310) of flight plan data transmitted by the remote flight management device (12),
- calculation of a remote trajectory or setpoint (320) based on the acquired flight plan data,
- transmission of the on-board trajectory or setpoint (330) to the remote flight management device (12),
- acquisition of a trajectory or setpoint validation result (340), the result being transmitted by the remote flight management device (12), and
- generating steering instructions (350) according to the trajectory or setpoint validation result.

9. A computer program comprising software instructions which, when executed by an on-board device (14) for managing the flight of an electronic system (10) for controlling an unmanned aircraft (11) in accordance with the claims 1 to 5, implement an on-board method (300) for controlling an unmanned aircraft (11) according to claim 8.
